# EUROPEAN PATENT APPLICATION

(11) **EP 3 079 368 A1**
(43) Date of publication of application: **12.10.2016**
(21) Application number: 14867020.1
(22) Date of filing: 21.11.2014
(51) Int. Cl.: H04N 21/236, H04H 20/33, H04L 29/00

(54) **DATA PROCESSING DEVICE, AND DATA PROCESSING METHOD**

(30) Priority: 04.12.2013 US 201361911807 P; 23.09.2014 US 201414494108
(71) Applicant: Sony Corporation, Tokyo 108-0075 (JP)
(72) Inventor: MICHAEL, Lachlan, Tokyo 108-0075 (JP); OKADA, Satoshi, Tokyo 108-0075 (JP); MUHAMMAD, Nabil Sven Loghin, Tokyo 108-0075 (JP)
(74) Representative: Witte, Weller & Partner Patentanwälte mbB
(86) International application number: PCT/JP2014/080868
(87) International publication number: WO 2015/083564

(57) **Abstract**

The present technology relates to a data processing device and a data processing method capable of performing appropriate stream processing.

An input stream constituted by a plurality of packets is split to generate split streams of a plurality of channels having a base band frame (BBF) arranged in order of sequence of the packets of the input stream in the data field of the BBF subject to forward error correction (FEC) as a minimum unit. The input stream is reconstructed from the split streams of the plurality of channels. The technology is applicable to a channel bonding (CB) technology which splits an input stream into streams of a plurality of channels and transmits the split streams, for example.

## Description

### TECHNICAL FIELD

The present technology relates to a data processing device and a data processing method, and more particularly to a data processing device and a data processing method capable of performing appropriate stream processing, for example.

### BACKGROUND ART

For example, Digital Video Broadcasting (DVB)-S2 adopted in European countries and other regions is known as a digital broadcasting system (Non-Patent Document 1).

### CITATION LIST

### NON-PATENT DOCUMENT

Non-Patent Document 1: DVB-S.2 : ETSI EN 302 307 V1.2.1 (2009-08)

### SUMMARY OF THE INVENTION

### PROBLEMS TO BE SOLVED BY THE INVENTION

One of technologies for transmitting a high-data-rate stream in digital broadcasting is a channel bonding (CB) technology which splits a high-data-rate stream into streams of a plurality of channels and transmits the split streams from the transmission side, and reconstructs the split streams of the plurality of channels into the original high-data-rate stream on the receiving side.

However, there is a risk that the stream cannot be properly processed in digital broadcasting like DVB-S2, even by using the CB technology.

The present technology has been developed in consideration of the aforementioned circumstances to realize appropriate stream processing.

### SOLUTIONS TO PROBLEMS

A first data processing device according to the present technology includes a split unit that splits an input stream constituted by a plurality of packets, and generates split streams of a plurality of channels having a base band frame (BBF) arranged in order of sequence of the packets of the input stream in the data field of the BBF subject to forward error correction (FEC) as a minimum unit.

A first data processing method according to the present technology includes a step that splits an input stream constituted by a plurality of packets, and generates split streams of a plurality of channels having a base band frame (BBF) arranged in order of sequence of the packets of the input stream in the data field of the BBF subject to forward error correction (FEC) as a minimum unit.

According to the first data processing device and data processing method of the present technology, an input stream constituted by a plurality of packets is split to generate split streams of a plurality of channels having a base band frame (BBF) arranged in order of sequence of the packets of the input stream in the data field of the BBF subject to forward error correction (FEC) as a minimum unit.

A second data processing device according to the present technology includes a reconstruction unit that reconstructs an input stream constituted by a plurality of packets from split streams of a plurality of channels transmitted from a transmitting device that splits the input stream, and generates the split streams of the plurality of channels having a base band frame (BBF) arranged in order of sequence of the packets of the input stream in the data field of the BBF subject to forward error correction (FEC) as a minimum unit.

A second data processing method according to the present technology includes a step that reconstructs an input stream constituted by a plurality of packets from split streams of a plurality of channels transmitted from a transmitting device that splits the input stream, and generates the split streams of the plurality of channels having a base band frame (BBF) arranged in order of sequence of the packets of the input stream in the data field of the BBF subject to forward error correction (FEC) as a minimum unit.

According to the second data processing device and data processing method of the present technology, an input stream is reconstructed from split streams of a plurality of channels transmitted from a transmitting device that splits the input stream, and generates the split streams of the plurality of channels having a base band frame (BBF) arranged in order of sequence of the packets of the input stream in the data field of the BBF subject to forward error correction (FEC) as a minimum unit.

The data processing device may be either an individual device, or an internal block constituting one device.

### EFFECTS OF THE INVENTION

According to the present technology, appropriate stream processing is achievable.

Advantages to be offered are not limited to these advantages, but may be any of advantages described in the present disclosure.

### BRIEF DESCRIPTION OF DRAWINGS

Fig. 1 is a block diagram illustrating a configuration example of a transmission system according to an embodiment of the present technology.
Fig. 2 is a flowchart describing an example of a process performed by the transmission system.
Fig. 3 is a block diagram illustrating a first configuration example of a CB split unit 11.
Fig. 4 is a flowchart describing an example of a process performed by the CB split unit 11 (transmitting process).
Fig. 5 is a block diagram illustrating a second configuration example of the CB split unit 11.
Fig. 6 is a flowchart describing an example of a process performed by the CB split unit 11 (transmitting process).
Fig. 7 is a block diagram illustrating a configuration example of a CB reconstruction unit 21.
Fig. 8 is a flowchart describing an example of a process performed by the CB reconstruction unit 21 (receiving process).
Fig. 9 is a view illustrating an example of split streams of channel ch#1 and channel ch#2, and an output stream.
Fig. 10 is a view illustrating an example of split streams of channel ch#1 and channel ch#2, and an output stream.
Fig. 11 is a view illustrating a format of ISSY specified in DVB-S2.
Fig. 12 is a view illustrating a format of a BBF of DVB-S2.
Fig. 13 is a view illustrating an example of signaling for notification that an input stream is a stream containing GSE packets, or a stream containing GSE-Lite packets.
Fig. 14 is a block diagram illustrating a configuration example of a computer according to an embodiment of the present technology.
Fig. 15 is a view showing Table 1 under standards of DVB-S2X.
Fig. 16 is a view showing Table 2 under standards of DVB-S2X.
Fig. 17 is a view showing Figure 1 under standards of DVB-S2X.
Fig. 18 is a view showing Figure 3 under standards of DVB-S2X.
Fig. 19 is a view showing Figure 4 under standards of DVB-S2X.

### MODE FOR CARRYING OUT THE INVENTION

### <Transmission System according to One Embodiment of Present Technology>

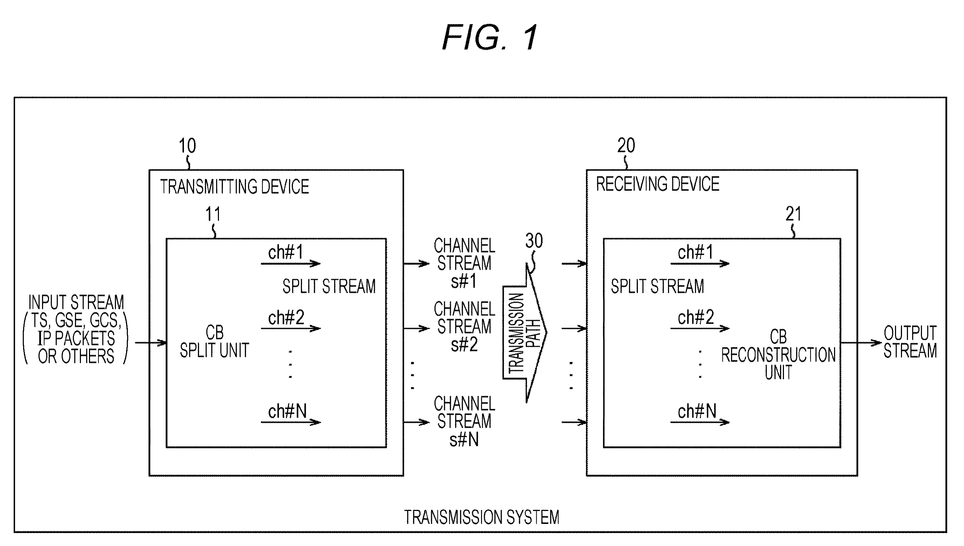

Fig. 1 is a block diagram illustrating a configuration example of a transmission system according to an embodiment of the present technology.

As illustrated in Fig. 1, the transmission system is constituted by a transmitting device 10 and a receiving device 20.

The transmitting device 10 performs transmission of TV broadcasting programs (including digital broadcasting and data transmission), for example. More specifically, the transmitting device 10 splits an input stream as a stream of target data corresponding to a transmission target, such as image data and audio data provided as a program, into streams of a plurality of channels by utilizing a CB technology, and sends (transmits) the split streams via a transmission path 30 such as a satellite channel, a terrestrial channel, and a cable (wired channel), for example.

More specifically, the transmitting device 10 includes a CB split unit 11 to which an input stream is supplied.

The input stream may be constituted by a transport stream (TS), a generic continuous stream (GCS), a stream of generic stream encapsulation (GSE) packets, a stream of GSE-Lite packets, a stream of internet protocol (IP) packets, or an arbitrary stream containing a plurality of other packets (user packets (UP)), for example.

The CB split unit 11 splits the input stream supplied thereto to generate split streams of N channels (a plurality of channels) ch#1, ch#2, and up to ch#N). Each of the split streams has a base band frame (BBF) arranged as a minimum unit. Packets of the input stream are arranged in sequence order of the packets into the data field of each BBF corresponding to a forward error correction (FEC) target.

The CB split unit 11 performs processing such as error correction encoding of FEC and modulation for the split streams of the respective channels ch#n, and transmits channel streams s#n of the respective channels ch#n obtained by the processing via the transmission path 30.

When the transmission system is a system in conformity with DVB-S2, for example, the transmission path 30 is a satellite channel. In this case, the channel streams s#n are transmitted via the transmission path 30 constituted by the satellite channel.

The receiving device 20 receives the streams of the plurality of channels transmitted from the transmitting device 10 via the transmission path 30, reconstructs the received streams into the original input stream, and outputs the reconstructed input stream.

More specifically, the receiving device 20 includes a CB reconstruction unit 21 which receives the channel streams s#n of the respective channels ch#n from the transmitting device 10.

Moreover, the CB reconstruction unit 21 performs demodulation, error correction decoding of FEC, and other processing for the channel streams s#n of the respective channels ch#n, reconstructs the resultant split streams of the respective channels ch#n into the original input stream, and outputs the reconstructed input stream as an output stream.

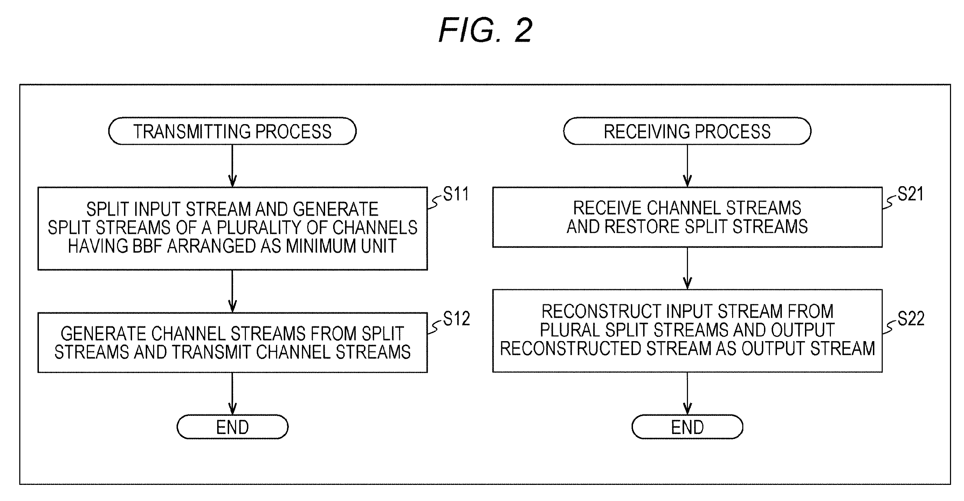

Fig. 2 is a flowchart describing an example of a process performed by the transmitting device 10 in Fig. 1 (transmitting process), and a process performed by the receiving device 20 in Fig. 1 (receiving process).

In step S11 of the transmitting process, the CB split unit 11 of the transmitting device 10 splits an input stream supplied thereto to generate split streams of N channels from ch#1 to ch#N. Each of the split streams has a BBF arranged as a minimum unit. Packets of the input stream are inserted in sequence order of the packets into the data field of each BBF corresponding to an FEC target. Then, the process proceeds to step S12.

In step S12, the CB split unit 11 performs processing such as error correction encoding and modulation for the split streams of the respective channels ch#n to generate the channel streams s#n of the respective channels ch#n.

The CB split unit 11 transmits the generated channel streams s#n of the respective channels ch#n via the transmission path 30.

In the receiving process, the CB reconstruction unit 21 of the receiving device 20 receives the channel streams s#n of the respective channels ch#n from the transmitting device 10 in step S21. The CB reconstruction unit 21 further performs processing such as demodulation and error correction decoding for the channel streams s#n of the respective channels ch#n to restore the split streams of the respective channels ch#n. Then, the process proceeds to step S22.

In step S22, the CB reconstruction unit 21 reconstructs the split streams of the channels ch#1 through ch#N into the original input stream, and outputs the original input stream as an output stream.

### <First Configuration Example of CB Split unit 11 of Transmitting Device 10>

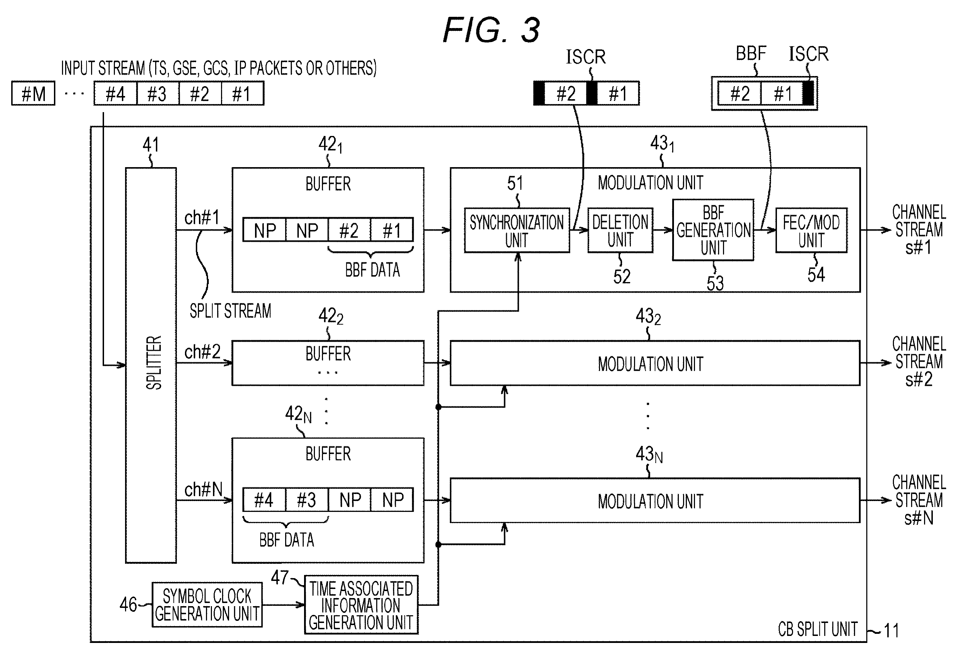

Fig. 3 is a block diagram illustrating a first configuration example of the CB split unit 11 of the transmitting device 10 illustrated in Fig. 1.

As illustrated in Fig. 3, the CB split unit 11 includes a splitter 41, N buffers 42₁ through 42_{N}, N modulation units 43₁ through 43_{N}, a symbol clock generation unit 46, and a time associated information generation unit 47.

The CB split unit 11 receives an input stream such as a high-data-rate (100 Mbps (Mega bit per second), for example) TS constituted by a plurality of TS packets #1, #2, and up to #M, and a high-data-rate stream constituted by a plurality of GSE-Lite packets #1, #2, and up to #M. The CB split unit 11 splits the input stream into split streams of N (or a smaller number of) channels constituting the plurality of channels by utilizing a CB technology.

The splitter 41 receives the input stream. The splitter 41 receives the input stream supplied thereto, and splits the received input stream into split streams of N (or a smaller number of) channels ch#1 through ch#N.

A base band frame (BBF) described below is a unit having a fixed length and corresponding to an FEC target, and contains a BB header and a data field. It is assumed herein that data of a data volume corresponding to the BBF data field, i.e., data arranged in the BBF data field is referred to as BBF data. The splitter 41 extracts (selects), as the BBF data, packets (data contained in packets) continuing for a volume corresponding to the data volume of the BBF data from the packets of the input stream, and distributes the extracted BBF data to one channel ch#n of the N channels ch#1 through ch#N.

The splitter 41 further extracts, as the BBF data, packets continuing for a volume corresponding to the data volume of the BBF data from the subsequent packets (data contained in packets) of the input stream, and distributes the extracted packets to a channel ch#n identical to the previous channel, or a different channel ch#n' of the N channels ch#1 through ch#N, and repeats distribution of the input stream in units of BBF data to generate split streams of the N channels ch#1 through ch#N from the input stream. Each of the split streams has BBF data arranged as a minimum unit.

The splitter 41 subsequently supplies the split stream (packets of the split stream) of the channel ch#n (nth channel) to the buffer 42ₙ.

The split stream of the channel ch#n included in the N channels ch#1 through ch#N generated by splitting the input stream in the manner described above by the splitter 41 has a lower data rate than the data rate of the input stream. Accordingly, the transmission band for transmission of the split stream of one channel becomes narrower than the transmission band of the input stream transmitted by one channel.

When the input stream is a TS, the splitter 41 distributes the BBF data to one of the N channels ch#1 through ch#N, and distributes a null packet (NP) having a data volume identical to the data volume of the BBF data to each of the other channels. Accordingly, when the input stream is a TS, areas between the respective BBF data are filled with NPs in each split stream of the channels ch#n.

The splitter 41 splits the input stream into split streams of the channels ch#1 through ch#N such that the intervals between the respective BBF data become shorter, and are equalized as much as possible in each split stream of the channels ch#n, for example. Moreover, the input stream is so split as to obtain a data rate (or a lower rate) allowed to be transmitted by the channel ch#n.

The buffer 42ₙ is an first in first out (FIFO), for example, which sequentially stores the split stream (packets of split stream) of the channel ch#n supplied from the splitter 41, and supplies the stored split stream of the channel ch#n to the modulation unit 43ₙ.

The modulation unit 43ₙ processes the split stream of the channel ch#n received from the buffer 42ₙ, and transmits the resultant channel stream s#1 of the channel ch#n.

The modulation unit 43ₙ includes a synchronization unit 51, a deletion unit 52, a BBF generation unit 53, and a forward error correction/modulation (FEC/MOD) unit 54.

The synchronization unit 51 receives the split stream of the channel ch#n from the buffer 42ₙ, and input stream time reference (ISCR) and others from the time associated information generation unit 47. This ISCR indicates transmission time of the packets, and corresponds to one of input stream synchronizer (ISSY) specified in DVB-S2 and others as time associated information associated with transmission time of the packets and the like.

The synchronization unit 51 adds the ISCR, which has been supplied from the time associated information generation unit 47 at the time of supply of the packets to the synchronization unit 51, to each end of the packets of the split stream of the channel ch#n received from the buffer 42ₙ, and supplies the resultant split stream of the channel ch#n to the deletion unit 52.

The deletion unit 52 deletes the NP inserted in accordance with splitting of the input stream by the splitter 41 from the split stream of the channel ch#n (split stream containing ISCR for each packet) received from the synchronization unit 51, and supplies the resultant split stream of the channel ch#n to the BBF generation unit 53.

When the input stream is a stream other than a TS, the deletion unit 52 supplies the split stream received from the synchronization unit 51 to the BBF generation unit 53 without change. Accordingly, the deletion unit 52 is not required when the input stream is not a TS.

The BBF generation unit 53 generates a BBF which contains BBF data in a data field of the BBF. The BBF data is data contained in the split stream of the channel ch#n supplied from the deletion unit 52. The BBF generation unit 53 supplies the split stream of the channel ch#n constituted by the BBF thus generated to the FEC/MOD unit 54.

More specifically, the BBF generation unit 53 generates a BB header (header of BBF) containing ISCR added to a head packet (earliest packet on the time basis in packets constituting BBF data), for example, corresponding to one of the packets constituting the BBF data contained in the split stream of the channel ch#n supplied from the deletion unit 52.

The BBF generation unit 53 further deletes ISCR added to the packets constituting the BBF data, and adds the BB header to the BBF data after deletion of ISCR to generate a BBF containing the BBF data in the data field after deletion of ISCR.

Then, the BBF generation unit 53 supplies the split stream of the channel ch#n constituted by the BBF thus generated, i.e., the split stream corresponding to the channel ch#n and having the BBF arranged as a minimum unit, to the FEC/MOD unit 54.

The BBF data obtained by the splitter 41 corresponds to continuous packets (data contained in packets) extracted from the input stream. Accordingly, the data field of the BBF obtained by the BBF generation unit 53 contains, as BBF data, one or more packets of the input stream arranged in sequence order of the packets.

As discussed above, ISCR added to each packet of the split stream by the synchronization unit 51 is deleted by the BBF generation unit 53. In this case, only ISCR added to the head packet of the BBF data is inserted into the BB header.

Accordingly, the synchronization unit 51 is allowed to add ISCR only to the head packet of the BBF data contained in the split stream, rather than add ISCR to each packet of the split stream.

In addition, the modulation unit 43ₙ may be configured without providing the synchronization unit 51. When the synchronization unit 51 of the modulation unit 43ₙ is eliminated, ISCR supplied from the time associated information generation unit 47 is received by the BBF generation unit 53. In this case, only ISCR received at the timing of the head packet of the BBF data in the ISCR received by the BBF generation unit 53 is inserted into the BB header of the BBF containing the corresponding BBF data in the data field.

According to the example discussed herein, ISCR added to the packets constituting the BBF data received from the deletion unit 52 is deleted by the BBF generation unit 53 to generate the BBF containing the BBF data in the data field after deletion of ISCR. However, the BBF generation unit 53 may generate a BBF containing the BBF data received from the deletion unit 52 in the data field without change. In this case, ISCR added to the head packet of the BBF data may be either included or not included in the BB header.

The FEC/MOD unit 54 performs FEC, i.e., error correction encoding such as BCH encoding and LDPC encoding, for an FEC target corresponding to the BBF of the split stream of the channel ch#n supplied from the BBF generation unit 53.

The FEC/MOD unit 54 further adds a physical layer (PL) header (including extension PL header) of DVB-S2 to the BBF (FEC frame) after error correction encoding, for example, to generate a split stream of the channel ch#n constituted by a PL frame of DVB-S2.

Thereafter, the FEC/MOD unit 54 symbolizes the split stream of the channel ch#n constituted by the PL frame into symbols each having a predetermined bit number, and performs quadrature modulation for the symbols. The FEC/MOD unit 54 transmits modulation signals obtained by the quadrature modulation in a transmission band (frequency band) of the channel ch#n as a channel stream s#n of the channel ch#n.

The symbol clock generation unit 46 generates a symbol clock corresponding to a symbol rate clock of one main channel (such as channel ch#1) in the channels ch#1 through ch#N, and supplies the generated symbol clock to the time associated information generation unit 47.

The time associated information generation unit 47 is constituted by a counter, for example, and counts in synchronization of the symbol clock received from the symbol clock generation unit 46 to generate ISSY such as ISCR corresponding to time associated information, and supplies the generated ISSY to the modulation units 43₁ through 43_{N} (synchronization units 51 of the modulation units 43₁ through 43_{N}). Accordingly, identical ISSY such as identical ISCR is supplied at each time to all of the modulation units 43₁ through 43_{N}.

### <Transmitting Process Performed by First Configuration Example of CB Split Unit 11>

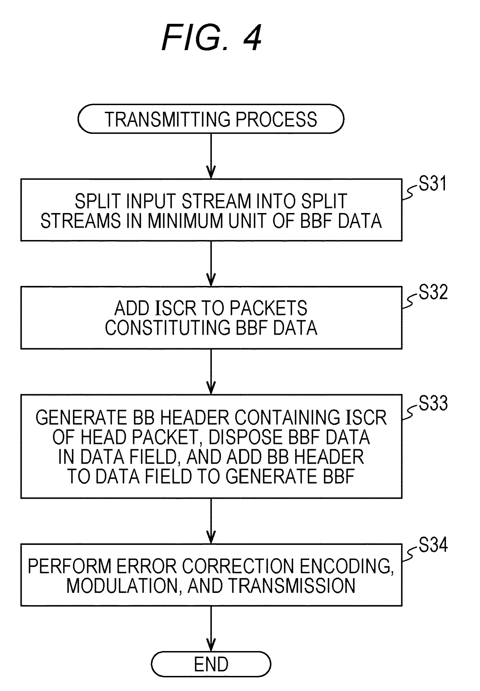

Fig. 4 is a flowchart describing a process (transmitting process) performed by the CB split unit 11 illustrated in Fig. 3.

In step S31, the splitter 41 splits an input stream supplied thereto to generate split streams of N channels ch#1 through ch#N. Each of the split streams has BBF data arranged as a minimum unit. The splitter 41 supplies the split stream of the channel ch#n to the buffer 42ₙ.

The buffer 42ₙ sequentially stores the split stream of the channel ch#n supplied from the splitter 41, and sequentially supplies the stored split stream of the channel ch#n to the modulation unit 43ₙ. The process proceeds from step S31 to step S32.

In step S32, the synchronization unit 51 of the modulation unit 43ₙ adds ISCR received from the time associated information generation unit 47 to each end of packets of the split stream of the channel ch#n received from the buffer 42ₙ, and supplies the resultant split stream of the channel ch#n to the deletion unit 52.

The deletion unit 52 deletes NP from the split stream of the channel ch#n received from the synchronization unit 51 (split stream containing ISCR added to each packet) when the input stream is a TS, and supplies the resultant split stream of the channel ch#n to the BBF generation unit 53. The process proceeds from step S32 to step S33.

In step S33, the BBF generation unit 53 generates a BB header containing ISCR added to the head packet of BBF data contained in the split stream of the channel ch#n supplied from the deletion unit 52.

The BBF generation unit 53 further deletes ISCR added to the packets constituting the BBF data, and inserts the BBF data into the data field of the BBF after deletion of the ISCR. Then, the BBF generation unit 53 adds the BB header to the data field containing the BBF data to generate a BBF, and supplies the split stream corresponding to the channel ch#n and having the generated BBF arranged as a minimum unit to the FEC/MOD unit 54. Then, the process proceeds from step S33 to step S34.

In step S34, the FEC/MOD unit 54 performs error correction encoding such as BCH encoding and LDPC encoding for a target, i.e., each BBF of the split stream of the channel ch#n supplied from the BBF generation unit 53.

The FEC/MOD unit 54 further constitutes a PL frame containing the BBF after error correction encoding, and performs quadrature modulation for the PL frame. Then, the FEC/MOD unit 54 transmits modulation signals of the split stream of the channel ch#n obtained by the quadrature modulation as a channel stream s#n of the channel ch#n.

Respective steps S31 through S34 of the transmitting process in Fig. 4 are performed via a pipe line.

As described above, the CB split unit 11 splits the input stream into split streams of the N channels ch#1 through ch#N having the BBF arranged as a minimum unit when transmitting the input stream. Accordingly, a high-data-rate input stream is transmittable by using a plurality of (N) channels each of which has a not-so wide transmission band.

Moreover, the FEC/MOD unit 54 for performing error correction encoding and the like for a target of the BBF obtained from the split stream of the channel ch#n may be constituted by a circuit which has a not-so high processing speed.

### <Second Configuration Example of CB Split Unit 11 of Transmitting Device 10>

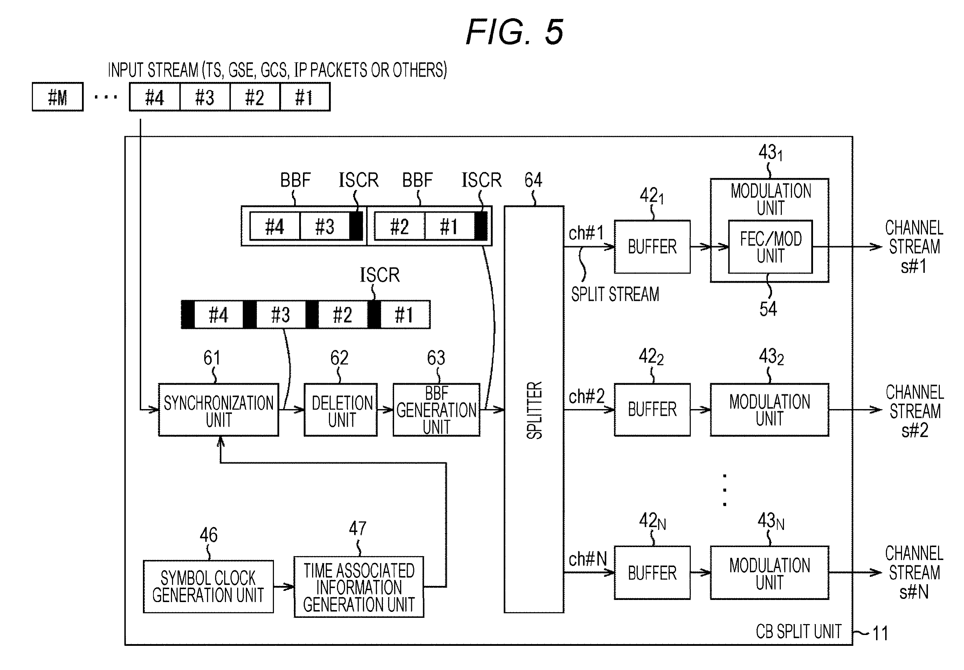

Fig. 5 is a block diagram illustrating a second configuration example of the CB split unit 11 of the transmitting device 10 illustrated in Fig. 1.

Parts in the figure similar to the corresponding parts in Fig. 3 are given similar reference numbers, and are not repeatedly explained herein.

As illustrated in Fig. 5, the CB split unit 11 includes the buffers 42₁ through 42_{N}, the modulation units 43₁ through 43_{N}, the symbol clock generation unit 46, and the time associated information generation unit 47 similarly to the CB split unit 11 illustrated in Fig. 3.

However, the CB split unit 11 in Fig. 5 is different from the CB split unit 11 in Fig. 3 in that a splitter 64 is provided in lieu of the splitter 41.

Moreover, the CB split unit 11 in Fig. 5 is different from the CB split unit 11 in Fig. 3 in that the modulation unit 43ₙ is constituted only by the FEC/MOD unit 54 in the respective components of the synchronization unit 51, the deletion unit 52, the BBF generation unit 53, and the FEC/MOD unit 54.

Furthermore, the CB split unit 11 in Fig. 5 is different from the CB split unit 11 in Fig. 3 in that a synchronization unit 61, a deletion unit 62, and a BBF generation unit 63 provided in lieu of the synchronization unit 51, the deletion unit 52, and the BBF generation unit 53 in Fig. 3 are disposed not inside the modulation unit 43ₙ, but on the upstream side of the splitter 64.

An input stream is supplied to the synchronization unit 61 of the CB split unit 11 in FIG. 5.

The synchronization unit 61 receives ISCR from the time associated information generation unit 47 at the time of supply of packets of the input stream to the synchronization unit 61, and adds the received ISCR to each end of the packets. The synchronization unit 61 supplies the resultant input stream to the deletion unit 62.

When the input stream received from the synchronization unit 61 (input stream containing ISCR added to each packet) is a TS, the deletion unit 62 deletes NP from the input stream constituted by the TS, and supplies the resultant input stream to the BBF generation unit 63.

When the input stream is a stream other than a TS, the deletion unit 62 supplies the split stream received from the synchronization unit 61 to the BBF generation unit 63 without change. Accordingly, the deletion unit 62 may be eliminated when the input stream is not a TS.

The BBF generation unit 63 generates a BBF containing packets of the input stream supplied from the deletion unit 62 and arranged in sequence order of the packets into the data field of the BBF, and supplies an input stream constituted by the BBF thus generated to the splitter 61.

Accordingly, the BBF generation unit 63 deletes ISCR added to the respective packets of the input stream supplied from the deletion unit 62, and sequentially extracts (selects), as BBF data, packets (data contained in packets) continuing by a data volume of the BBF data from the input stream after deletion of ISCR to split the input stream into units of BBF data.

The BBF generation unit 63 further generates a BB header containing ISCR added to the head packet of the BBF data.

The BBF generation unit 63 adds the generated BB header to the BBF data to generate a BBF containing the BBF data in the data field.

The BBF generation unit 63 supplies an input stream constituted by the BBF thus generated, i.e., an input stream having the BBF arranged as a minimum unit, to the splitter 64.

The BBF data obtained by the BBF generation unit 63 contains continuous packets (data contained in packets) extracted from the input stream, wherefore the packets (data contained in packets) of the input stream as the BBF data are contained in the data field of the BBF obtained by the BBF generation unit 63 in sequence order of the packets (data contained in packets) of the input stream as the BBF data.

Similarly to the example illustrated in Fig. 3, the synchronization unit 61 adds ISCR not to each of the packets of the input stream, but only to the head packet of the BBF data of the input stream.

Moreover, the synchronization unit 61 of the CB split unit 11 may be eliminated. In this case, the BBF generation unit 63 is configured to receive ISCR supplied from the time associated information generation unit 47. According to this configuration, ISCR received at the timing of the head packet of the BBF data in the ISCR received by the time associated information generation unit 47 is arranged by the BBF generation unit 63 into the BB header of the BBF containing the BBF data in the data field.

According to the example discussed herein, the BBF generation unit 63 deletes ISCR added to the packets constituting the BBF data received from the deletion unit 62, and generates a BBF containing the BBF data in the data field after deletion of the ISCR. However, the BBF generation unit 63 may generate a BBF containing the BBF data received from the deletion unit 62 in the data field without change, for example. In this case, ISCR added to the head packet of the BBF data may be either included or not included into the BB header.

The splitter 64 receives the input stream having a BBF arranged as a minimum unit from the BBF generation unit 63, and splits the input stream into split streams of N (or a smaller number of) channels ch#1 through ch#N. Each of the split streams has a BBF arranged as a minimum unit.

More specifically, the splitter 64 extracts (selects) a BBF from the input stream, and distributes the extracted BBF to one channel ch#n in the N channels ch#1 through ch#N.

The splitter 64 further distributes a subsequent BBF in the input stream to the channel ch#n identical to the previous channel, or a different channel ch#n' of the N channels ch#1 through ch#N, and repeats distribution of the input stream in units of BBF to generate split streams corresponding to the N channels ch#1 through ch#N and having BBF arranged as a maximum unit from the input stream.

The splitter 64 supplies the generated split stream of the channel ch#n to the buffer 42ₙ.

The buffer 42ₙ temporarily stores the split stream of the channel ch#n received from the splitter 64, and supplies the stored split stream to the FET/MOD unit 54 of the modulation unit 43ₙ. The FET/MOD unit 54 performs processing similar to the processing of the example illustrated in Fig. 3 for the BBF of the split stream of the channel ch#n received from the buffer 42ₙ.

More specifically, the FET/MOD unit 54 performs FEC, i.e., error correction encoding such as BCH encoding and LDPC encoding, for a target of FEC corresponding to the BBF of the split stream of the channel ch#n received from the buffer 42ₙ. The FEC/MOD unit 54 further constitutes a PL frame containing the BBF (FEC frame) after error correction encoding. Then, the FEC/MOD unit 54 performs quadrature modulation for the split stream of the channel ch#n constituted by the PL frame, and transmits modulation signals of the transmission band of the channel ch#n obtained by the quadrature modulation as a channel stream s#n of the channel ch#n.

Similarly to the example illustrated in Fig. 3, the splitter 64 of the CB split unit 11 in Fig. 5 splits an input stream into split streams of the N channels ch#1 through ch#N when transmitting the input stream. In this case, the data rate of each split stream of the channels ch#n becomes lower than the data rate of the input stream. Accordingly, the transmission band for transmission of a split stream by one channel becomes narrower than the transmission band for transmission of the input stream.

The splitter 64 splits the input stream into split streams of the channels ch#1 through ch#N such that the intervals between the respective BBF become shorter, and are equalized as much as possible in the split stream of the channel ch#n, and that the split stream has a data rate (or lower) allowed for transmission by the channel ch#n, for example, similarly to the example illustrated in Fig. 3.

### <Transmitting Process Performed by Second Configuration Example of CB Split Unit 11>

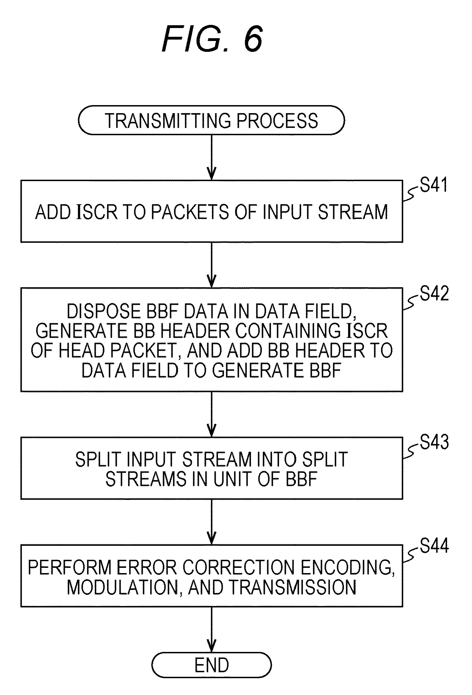

Fig. 6 is a flowchart describing a process (transmitting process) performed by the CB split unit 11 in Fig. 5.

In step S41, the synchronization unit 61 adds ISCR received from the time associated information generation unit 47 to each end of packets of an input stream supplied to the synchronization unit 61, and supplies the resultant input stream to the deletion unit 62.

The deletion unit 62 deletes NP from the input stream received from the synchronization unit 61 as necessary, and supplies the resultant input stream to the BBF generation unit 63. Then, the process proceeds from step S41 to step S42.

In step S42, the BBF generation unit 63 deletes ISCR added to each packet of the input stream supplied from the deletion unit 62, and extracts, as BBF data, packets (data contained in packets) continuing by a data volume of the BBF data from the input stream after deletion of the ISCR to split the input stream into units of BBF data.

The BBF generation unit 63 further generates a BB header containing ISCR added to the head packet of the BBF data.

The BBF generation unit 63 inserts the BBF data into the data field, and adds the BB header to the data field of the BBF data to generate a BBF containing the BBF data in the data field.

The BBF generation unit 63 supplies an input stream having the BBF thus generated arranged as a minimum unit to the splitter 64. Then, the process proceeds from step S42 to step S43.

In step S43, the splitter 64 distributes the input stream received from the BBF generation unit 63 to the N channels ch#1 through ch#N in units of the BBF to split the input stream into split streams corresponding to the N channels ch#1 through ch#N and having the BBF arranged as a minimum unit.

The split stream of the channel ch#n is supplied from the splitter 64 to the modulation unit 43ₙ via the buffer 42ₙ. Then, the process proceeds from step S43 to step S44.

In step S44, the FET/MOD unit 54 of the modulation unit 43ₙ performs error correction encoding such as BCH encoding and LDPC encoding for a target of each BBF of the split stream of the channel ch#n supplied via the buffer 42ₙ.

The FEC/MOD unit 54 further constitutes a PL frame containing the BBF after error correction encoding, and performs quadrature modulation for the PL frame. Then, the FEC/MOD unit 54 transmits modulation signals of the split stream of the channel ch#n obtained by the quadrature modulation as a channel stream s#n of the channel ch#n.

Respective steps S41 through S44 of the transmitting process in Fig. 6 are performed via a pipe line.

Similarly to the example illustrated in Fig. 3, the CB split unit 11 in Fig. 5 splits an input stream into split streams of the N channels ch#1 through ch#N when transmitting the input stream. Accordingly, transmission of a high-data-rate input stream is allowed by using a plurality of channels each of which has a not-so wide transmission band.

Moreover, the FEC/MOD unit 54 for performing error correction encoding and the like for a target of the BBF of the split stream of the channel ch#n may be constituted by a circuit which has a not-so high processing speed.

### <Configuration Example of CB Reconstruction Unit 21 of Receiving Device 20>

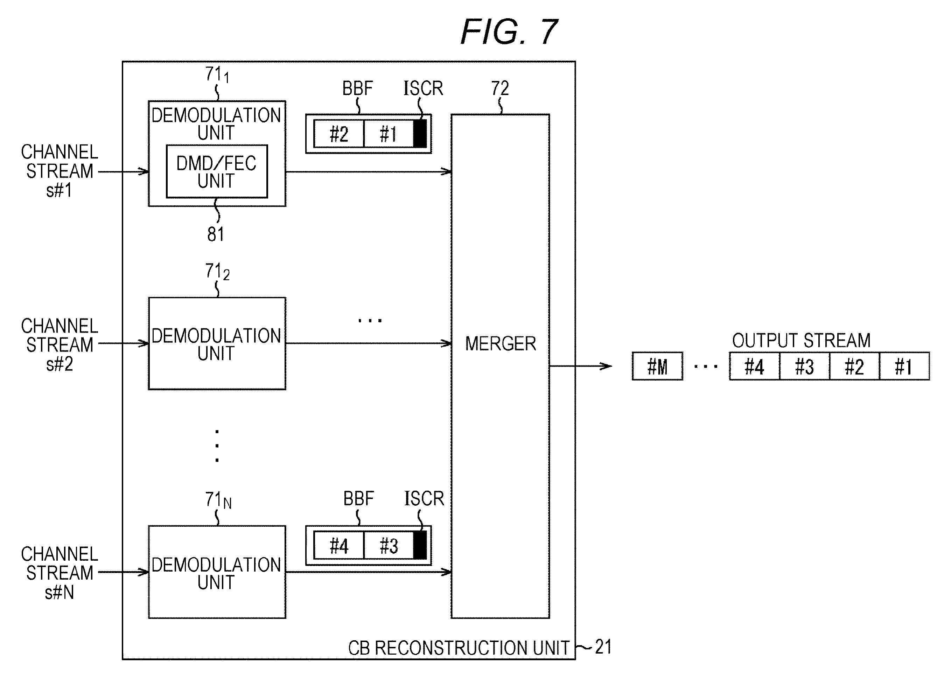

Fig. 7 is a block diagram illustrating a configuration example of the CB reconstruction unit 21 of the receiving device 20 in Fig. 1.

As illustrated in Fig. 7, the CB reconstruction unit 21 includes N demodulation units 71₁ through 71_{N}, and a merger 72.

The demodulation units 71 receive and process the channel streams s#n of the channel ch#n transmitted from the transmitting device 10.

More specifically, each of the demodulation units 71 includes a de-modulation/forward error correction (DMD/FEC) unit 81.

Each of the DMD/FEC units 81 receives the channel stream s#n of the channel ch#n transmitted from the transmitting device 10, and demodulates the channel stream s#n of the channel ch#n for modulation by the FEC/MOD unit 54 illustrated in Fig. 3 or 5. Then, the DMD/FEC unit 81 performs decoding for demodulation signals of the channel ch#n obtained by the demodulation as decoding of error correction encoding for error correction performed by the FEC/MOD unit 54 illustrated in Fig. 3 or 5 to restore the split stream of the channel ch#n having a BBF arranged as a minimum unit and supplied to the FEC/MOD unit 54 illustrated in Fig. 3 or 5. Then, the DMD/FEC unit 81 supplies the restored split stream to the merger 72.

The merger 72 decomposes each BBF constituting the split streams of the channels ch#1 through ch#N supplied from the respective DMD/FEC units 81 of the demodulation units 71₁ through 71_{N}, and extracts BBF data contained in the data field of the BBF.

The merger 72 further arranges the BBF data extracted from each BBF in the order of time (transmission time) indicated by ISCR as time information included in the BB header of the BBF to reconstruct the input stream constituted by a plurality of packets, and output the reconstructed input stream as an output stream.

### <Receiving Process>

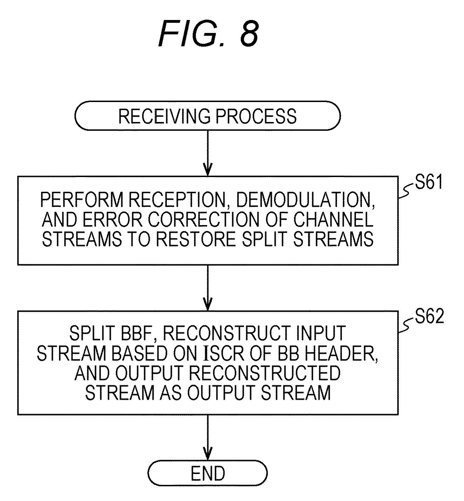

Fig. 8 is a flowchart describing an example of a process (receiving process) performed by the CB reconstruction unit 21 in Fig. 7.

In step S61, the DMD/FEC unit 81 of each of the demodulating units 71ₙ receives the channel stream s#n of the channel ch#n transmitted from the transmitting device 10, and performs demodulation and error correction to restore the split stream of the channel ch#n, and supplies the restored split stream to the merger 72. Then, the process proceeds to step S62.

In step S62, the merger 72 decomposes each BBF constituting each split stream of the channels ch#1 through ch#N supplied from the DMD/FEC units 81 of the demodulation units 71₁ through 71_{N}, and extracts BBF data contained in the data field of the BBF.

The merger 72 further arranges the BBF data extracted from each BBF in the order specified in ISCR contained in the BB header of the BBF to reconstruct the input stream. The reconstructed input stream is output as an output stream to end the process.

The processes in steps S61 and S62 in Fig. 8 are performed via a pipe line.

As described above, the merger 72 arranges BBF data extracted from each BBF based on ISCR contained in the BB header of the BBF. Accordingly, the original input stream is restored from the split streams of the channel ch#1 through ch#N.

As described above, the CB split unit 11 of the transmitting device 10 extracts, as BBF data, packets (data contained in packets) continuing by a data volume of the BBF data from the input stream, and inserts the BBF data into the data field of each BBF to generate split streams corresponding to the N channels ch#1 through ch#N and having the BBF arranged as a minimum unit in the data field of the BBF in sequence order of the packets of the input stream. Accordingly, the packets of the input stream are contained in the data field of the BBF in sequence order of the packets.

As understood from the foregoing description, packets of an input stream are contained in the data field of each BBF in sequence order of the packets. Therefore, ISCR contained in the BB header of the BBF, i.e., according to this embodiment, the packets corresponding to BBF data are contained in the data field of each BBF constituting the split streams of the channels ch#1 through ch#N in accordance with ISCR added to the head packet contained in the data field of each BBF. Accordingly, restoration of the input stream (arrangement of packets) is achievable.

### <Examples of Split Stream and Output Stream>

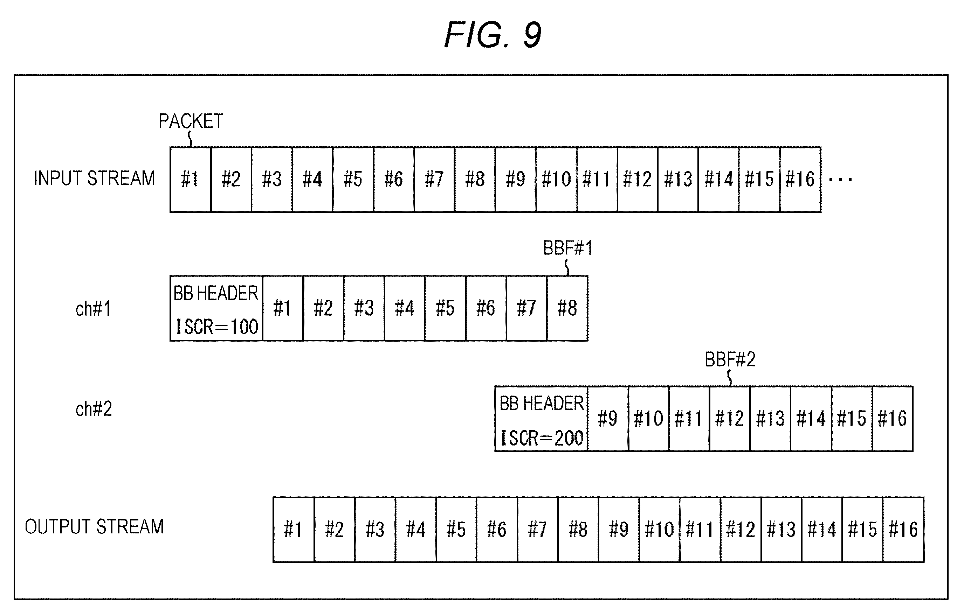

Fig. 9 is a view illustrating an example of split streams of N channels constituted by two channels of ch#1 and ch#2, and an output stream when packets (data contained in packets) continuing by a data volume of BBF data are extracted as BBF data from an input stream, and arranged as the extracted BBF data into the data field of each BBF.

As illustrated in Fig. 9, packets #1, #2 and others are arranged in this order in the input stream.

According to the example illustrated in Fig. 9, continuous eight packets corresponding to the data volume of BBF data, such as packets #1 through #8, or packets #9 through #16, are extracted as BBF data from the input stream, and arranged as the extracted BBF data into the data field to constitute each BBF.

The input stream is split into split streams corresponding to the channels ch#1 and ch#2 and containing the BBF thus extracted.

A BB header of the BBF constituting the split stream contains ISCR added to the head packet of the BBF data contained in the BBF.

According to the example illustrated in Fig. 9, a BBF#1 containing the continuous packets #1 through #8 as BBF data in the data field corresponds to the BBF of the split stream of the channel ch#1. On the other hand, a BBF#2 containing the continuous packets #9 through #16 as BBF data in the data field corresponds to the BBF of the split stream of the channel ch#2.

The BB header of the BBF#1 contains ISCR, such as "100", which is added to the head packet #1 in the packets #1 though #8 corresponding to the BBF data contained in the BBF#1.

On the other hand, the BB header of the BBF#2 contains ISCR, such as "200", which is added to the head packet #9 in the packets #9 though #16 corresponding to the BBF data contained in the BBF#2.

According to the example illustrated in Fig. 9, the eight continuous packets #1 through #8 corresponding to the BBF data contained in the split stream BBF#1 of the channel ch#1, and the eight continuous packets #9 through #16 corresponding to the BBF data contained in the split stream BBF#2 of the channel ch#2 are arranged side by side in accordance with ISCR contained in the BB header of the BBF constituting the split stream by side to reconstruct the original input stream as an output stream.

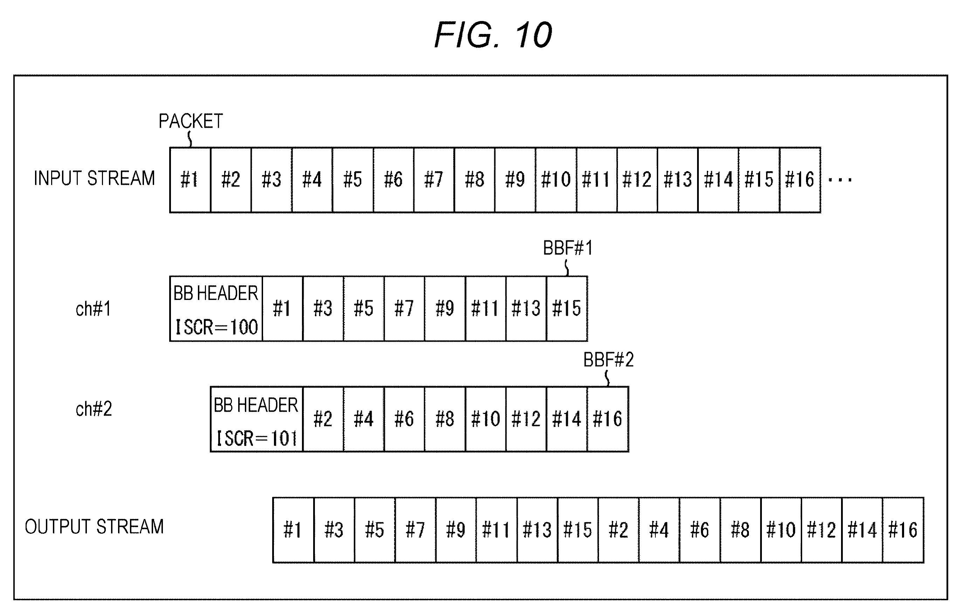

Fig. 10 is a view illustrating an example of split streams of N channels constituted by two channels of ch#1 and ch#2, and an output stream when packets not continuing by a data volume of BBF data are extracted as BBF data from an input stream, and arranged as the extracted BBF data into the data field of each BBF.

As illustrated in Fig. 10, packets #1, #2 and others are constituted by being arranged in this order in the input stream similarly to the example illustrated in Fig. 9.

According to the example illustrated in Fig. 10, packets not continuing by the data volume of the BBF data, such as eight packets constituted by every other packet starting from packet #1, i.e., #1, #3, and up to #15, or eight packets constituted by every other packet starting from packet #2, i.e., #2, #4, and up to #16, are extracted as BBF data from the input stream, and arranged as the BBF data into the data field to constitute each BBF.

The input stream is split into split streams corresponding to the channels ch#1 and ch#2 and containing the BBF thus extracted.

A BB header of the BBF constituting the split stream contains ISCR added to the head packet of the BBF data contained in the BBF.

According to the example illustrated in Fig. 10, the BBF#1 containing the eight packets #1, #3, and up to #15 constituted by every other packet starting from packet #1, in the data field as BBF data corresponds to the BBF of the split stream of the channel ch#1, while the BBF#2 containing the eight packets #2, #4, and up to #16 constituted by every other packet starting from packet #2, in the data field as BBF data corresponds to the BBF of the split stream of the channel ch#2.

The BB header of the BBF#1 contains ISCR, such as "100", which is added to the head packet #1 in the packets #1, #3 and up to #15 as the BBF data contained in the BBF#1.

On the other hand, the BB header of the BBF#2 contains ISCR, such as "101", which is added to the head packet #2 in the packets #2, #4 and up to #16 as the BBF data contained in the BBF#2.

According to the example illustrated in Fig. 10, the eight discontinuous packets #1, #3 and up to #15 corresponding to the BBF data contained in the split stream BBF#1 of the channel ch#1, and the eight discontinuous packets #2, #4 and up to #16 corresponding to the BBF data contained in the split stream BBF#2 of the channel ch#2 are arranged side by side in accordance with ISCR contained in the BB header of each BBF constituting the split stream. In this case, a resultant output stream contains packets disposed in the order of #1, #3 and up to #15, and #2, #4 and up to #16.

Accordingly, when the BBF is constituted by packets not continuing by a data volume of BBF data as BBF data, it is difficult to reconstruct the original input stream as an output stream based only on ISCR contained in the BB header of the BBF constituting the split stream.

### <ISSY Format>

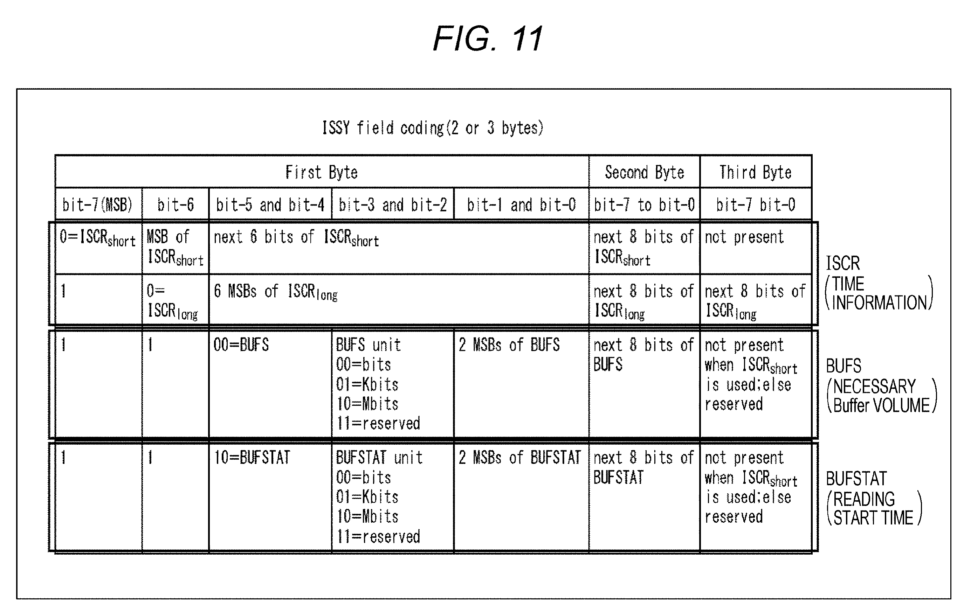

Fig. 11 is a view illustrating a format of ISSY specified in DVB-S2.

ISSY includes ISCR, BUFS, and BUFSTAT.

As described above, ISCR is time information indicating transmission time of a packet and constituted by 2 or 3 bytes.

There are two types of ISCR, i.e., short ISCR and long ISCR. Short ISCR is constituted by 2 bytes, while long ISCR is constituted by 3 bytes.

BUFS is information constituted by (substantially) 2 bytes, and indicating a buffer capacity (necessary buffer volume) necessary for a buffer (not shown) for temporarily storing a split stream after deletion of NP by the deletion unit 52 of the CB split unit 11 (Fig. 3) (hereinafter also referred to as stream after deletion) when the split stream containing the NP inserted by the splitter 41 (hereinafter also referred to as NP insertion stream) is restored by inserting NP into the stream after deletion.

Two bits of fifth bit and sixth bit from the head of a bit stream as 2-byte (first byte and Second byte) BUFS are called BUFS_UNIT, and shows a unit of the buffer capacity indicated by BUFS. On the other hand, ten bits from the seventh bit to the last 16th bit indicate a value of the buffer capacity.

According to the receiving device 20, the merger 72 of the CB reconstruction unit 21 (Fig. 7) secures a storage area as a buffer having the buffer capacity indicated by BUFS, and restores the stream after deletion to the NP insertion stream by writing the stream after deletion to the buffer, and reading the stream after deletion while inserting NP.

BUFSTAT is information constituted by (substantially) 2 bytes, and indicating reading start time for reading a packet from the buffer when the merger 72 restores the stream after deletion to the NP insertion stream by reading the packet (of the stream after deletion) stored in the buffer.

Two bits of fifth bit and sixth bit from the head of a bit stream as 2-byte (first byte and Second byte) BUFSTAT is called BUFSTAT_UNIT, and show a unit of reading start time indicated by BUFSTAT. Ten bits from seventh bit to the last 16th bit indicate a value of the reading start time. The ten bits of BUFSTAT indicate the reading start time based on a data residual volume in the buffer at the time of reading of the packet from the buffer.

According to the receiving device 20, the merger 72 starts reading of a packet from the buffer in accordance with the timing (time) indicated by BUFSTAT to restore the stream after deletion to the NP insertion stream.

### <BBF Format>

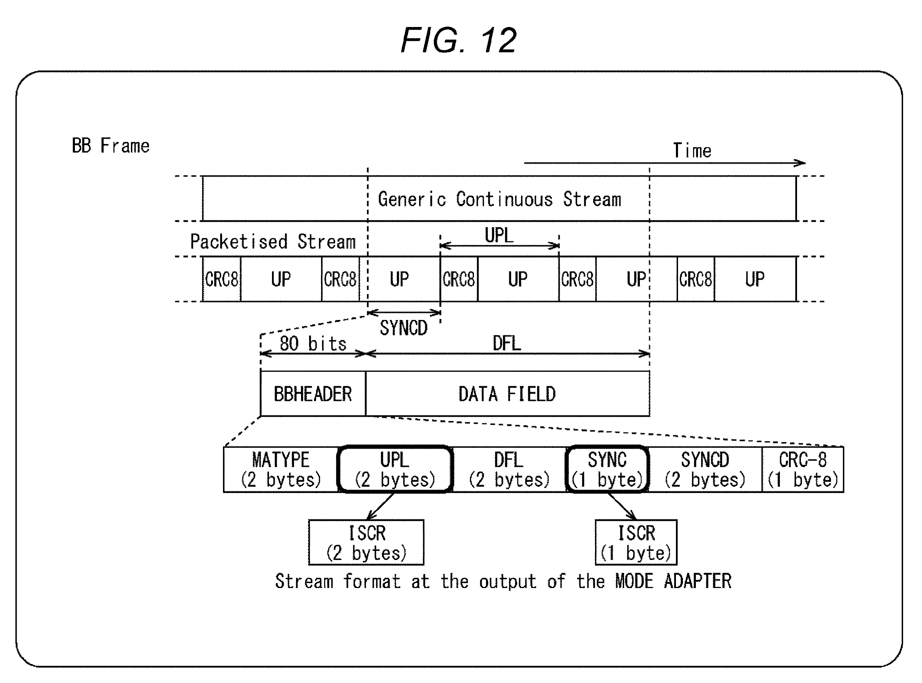

Fig. 12 is a view illustrating a BBF format in DVB-S2.

According to the CB split unit 11 (Figs. 3 and 5) as described above, ISCR of the head packet of BBF data contained in the data field of a BBF is inserted into the BB header of the corresponding BBF.

When ISCR is inserted into the BB header, the field for containing ISCR may be a field for which a fixed value is established in DVB-S2 in the respective fields of the BB header, for example.

The field for which a fixed value is established in the BB header includes a two-byte UPL field and a one-byte SYNC field, for example.

When ISCR is constituted by three bytes, for example, two bytes on the most significant bit (MSB) side in the 3-byte ISCR may be inserted into the UPL field, while one byte on the least significant bit (LSB) side may be inserted into the SYNC field.

### <Signaling When Input Stream Is Stream of GSE Packets or GSE-Lite Packets>

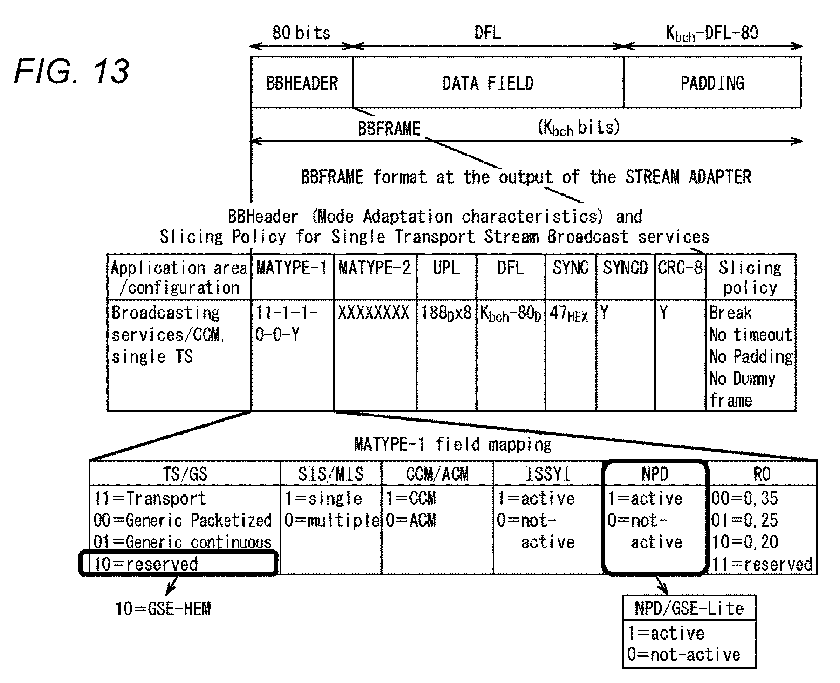

Fig. 13 is a view illustrating an example of signaling for notification that an input stream is a stream of GSE packets or GSE-Lite packets.

More specifically, Fig. 13 shows a format of a BB header included in a BBF of DVB-S2.

The BB header of the BBF of DVB-S2 is constituted by 80-bit data containing 1-byte MATYPE-1, 1-byte MATYPE-2, 2-byte UPL, 2-byte DFL, 1-byte SYNC, 2-byte SYNCD, and 1-byte CRC-8 arranged in that order.

In this case, 2-bit TS/GS, 1-bit SIS/MIS, 1-bit CCM/ACM, 1-bit ISSYI, 1-bit NPD, and 2-bit RO are allocated in this order to the 1-byte MATYPE-1 at the head of the BB header.

According to DVB-S2, TS/GS is set to 11b (b indicates that a numerical value immediately before b is a binary digit) when the input stream is a TS and thus contains TS packets in the BBF (TS packets are contained in the data field of the BBF).

According to DVB-S2, TS/GS is set to 00b when the input stream is a Generic Packetized stream, and set to 01b when the input stream is a Generic Continuous stream.

However, according to DVB-S2, no setting is specified for TS/GS when the input stream is a stream of GSE packets or GSE-Lite packets.

According to DVB-S2, 10b is not used for 2-bit TS/GS. According to DVB-S2, NPD does not function when TS/GS is set to 10 corresponding to a not-used value (NPD functions when the input stream is a TS and sets 11b for TS/GS).

When the mode of the input stream for transmitting a stream of GSE packets or GSE-Lite packets is GSE-high efficiency mode (HEM), TS/GS and NPD of MATYPE-1 of the BB header may be adopted as GSE-HEM signaling corresponding to signaling for notification of GSE-HEM.

More specifically, when the input stream is a stream of GSE packets or GSE-Lite packets, TS/GS may be set to 10 indicating GSE-HEM. In this case, NPD is determined based on which of GSE packets or GSE-Lite packets corresponds to the input stream.

More specifically, when the input stream is a stream of GSE packets, for example, NPD is set to 0. When the input stream is a stream of GSE-Lite packets, NPD is set to 1.

According to this GSE-HEM signaling, the input stream is identified as a stream of GSE-Lite packets when TS/GS and NPD are set to 10 and 1, respectively.

On the other hand, the input stream is identified as a stream of GSE packets when TS/GS and NPD are set to 10 and 0, respectively.

The BBF generation unit 53 (Figs. 3 and 5) generates a BB header containing the foregoing GSE-HEM signaling for a BBF generated by the BBF generation unit 53.

By transmission of the BBF containing the foregoing BB header, the receiving device 20 having received the BBF easily identifies that data in the data field of the BBF contains GSE packets or GSE-Lite packets, for example, based on the GSE-HEM signaling contained in the BB header of the BBF.

Accordingly, the data field of the BBF containing GSE packets or GSE-Lite packets is identified without a need of a complicated rule or logic requiring analysis of the data field of the BBF on the receiving device 20 side for identifying the data field of the BBF containing GSE packets or GSE-Lite packets.

### <Description of Computer according to Present Technology>

A series of processes described herein, such as splitting and reconstruction of an input stream, may be executed either by hardware or software. When the series of processes are executed by software, programs constituting the software are installed in a computer such as a processor.

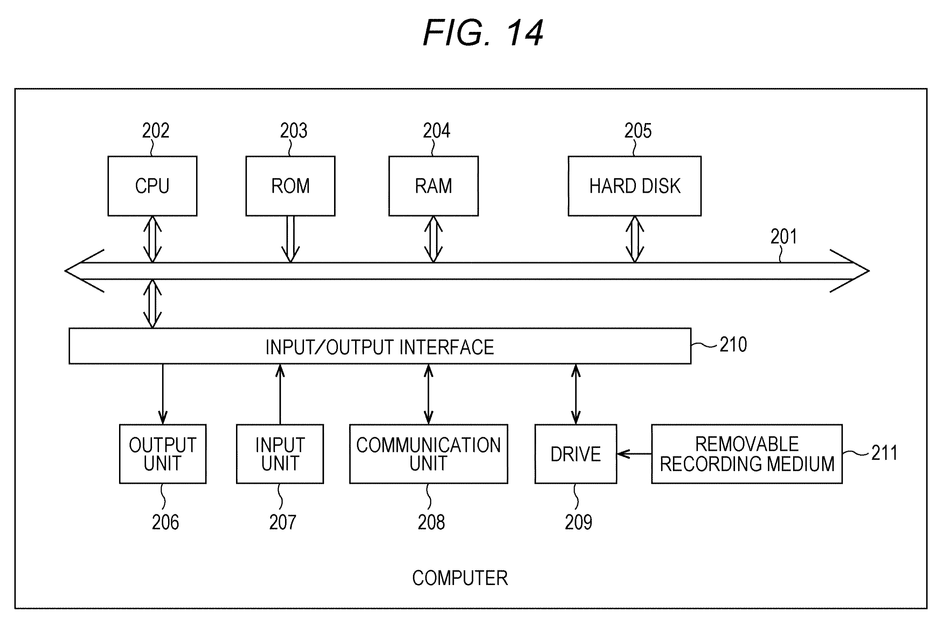

Fig. 14 is a block diagram illustrating a configuration example of a computer which executes the series of processes described herein under the programs installed in the computer.

The programs may be recorded in advance in a hard disk 205 or a ROM 203 as a recording medium included in the computer.

Alternatively, the programs may be stored (recorded) in a removable recording medium 211. The removable recording medium 211 may be provided as so-called package software. The removable recording medium 211 is constituted by a flexible disk, a compact disc read only memory (CD-ROM), magneto optical (MO) disk, a digital versatile disc (DVD), a magnetic disk, or a semiconductor memory, for example.

The programs may be downloaded to the computer via a communication network or a broadcasting network, and installed into the built-in hard disk 205, in addition to being installed into the computer from the removable recording medium 211 in the manner described above. More specifically, the programs may be wirelessly transferred to the computer from a download site via a satellite for digital satellite service, or may be transferred by wire through a network such as a local area network (LAN) and the Internet.

The computer includes a central processing unit (CPU) 202 to which an input/output interface 210 is connected via a bus 201.

When an instruction is input to the CPU 202 from a user via the input/output interface 210 by operation of an input unit 207 or by other methods, the CPU 202 executes the programs stored in the read only memory (ROM) 203 in response to the instruction. Alternatively, the CPU 202 loads the programs stored in the hard disk 205 into a random access memory (RAM) 204 and executes the loaded programs.

According to this configuration, the CPU 202 executes processes shown in the foregoing flowcharts, or processes performed by using the configurations illustrated in the foregoing block diagrams. The CPU 202 outputs the processing results from an output unit 206 via the input/output interface 210 or transmits the processing results from a communication unit 208, and records the processing results in the hard disk 205 as necessary, for example,.

The input unit 207 is constituted by a keyboard, a mouse, a microphone or the like. The output unit 206 is constituted by a liquid crystal display (LCD), a speaker or the like.

The processes in the present specification executed by the computer under the programs need not be performed in time series in the order described in the flowcharts. Accordingly, the processes executed by the computer under the programs include processes executed in parallel or individually (such as parallel processes or processes by objects).

The programs may be processed by one computer (processor) only, or may be separately processed by a plurality of computers.

According to the present specification, the system refers to a collection of plural constituent elements (such as devices and modules (parts)). In this case, all of the constituent elements are not required to be included in a same housing. Accordingly, multiple devices accommodated in separate housings and connected via a network, and one device including multiple modules accommodated within one housing are both regarded as systems.

Embodiments of the present technology are not limited to the specific embodiment described herein. Various modifications and changes may be made without departing from the subject matters of the present technology.

For example, the present technology may adopt a cloud computing configuration where a plurality of devices share one function and perform the function in cooperation with each other via a network.

The respective steps discussed with reference to the foregoing flowcharts may be shared and executed by multiple devices rather than executed by one device.

When multiple processes are contained in one step, the multiple processes contained in the one step may be shared and executed by multiple devices rather than executed by one device.

Since the advantageous effects described in the present specification are presented only by way of example, other advantageous effects may also be present.

According to this embodiment, ISCR corresponding to time information about a head packet of BBF data is included in a BB header. However, ISCR may be included in the data field of the BBF together with or in place of the BB header.

In addition, ISCR contained in the BB header may be ISCR of a packet other than the head packet of the BBF data (such as second or last packet).

### <Specification of GSE-HEM in DVB-S2X>

Hereinafter presented is description concerning GSE-HEM specified in standards of DVB-S2X extended from DVB-S2 "Digital Video Broadcasting (DVB); Second generation framing structure, channel coding and modulation systems for Broadcasting, Interactive Services, News Gathering and other broadband satellite applications Part II: S2-Extensions (DVB-S2X) - (Optional) DVB Document A83-2 March 2014".

### 4.3 System configurations

### (see Part I, clause 4.3)

Table 1 associates the S2X system elements to the applications areas. All elements in Table 1 are optional in transmitting and receiving equipment complying with the S2 specification. At least "Normative" subsystems and functionalities shall be implemented in the transmitting and receiving equipment to comply with the S2X specification for a specific application area.

Within the present Annex, a number of configurations and mechanisms are defined as "Optional". Configurations and mechanisms explicitly indicated as "optional" within the present Annex, for a given application area, need not be implemented in the equipment to comply with the S2X specification. Nevertheless, when an "optional" mode or mechanism is implemented, it shall comply with the specification as given in the present document.

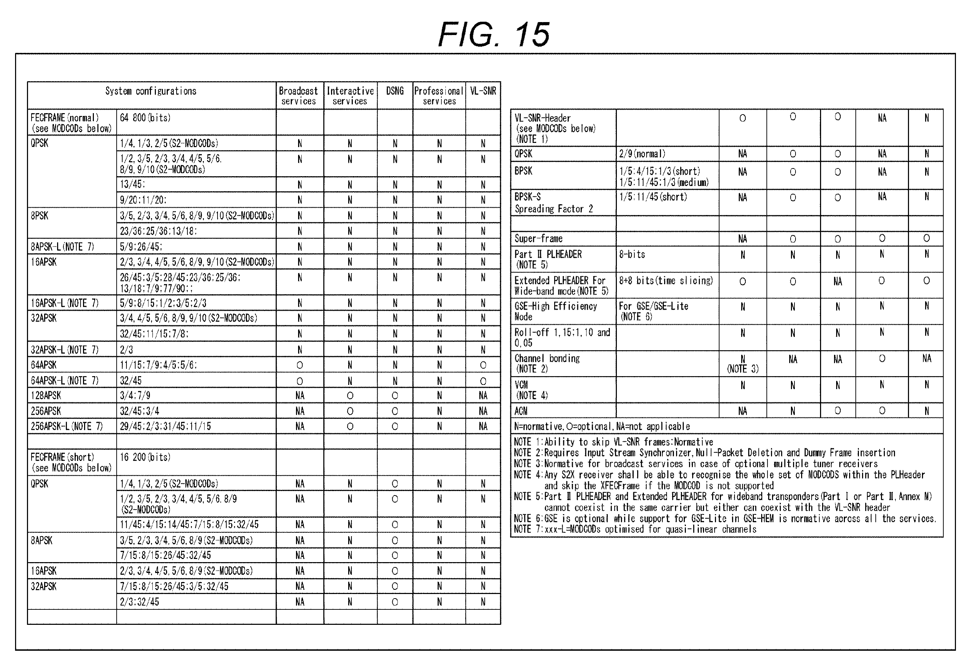

Fig. 15 shows Table 1 under standards of DVB-S2X.

### 5.1.6 Base-Band Header insertion

### (see Part I, clause 5.1.6)

First byte (MATYPE-1):
- TS/GS field (2 bits): Transport Stream Input, Generic Stream Input (packetized or continuous) or GSEHEM.
- SIS/MIS field (1 bit): Single Input Stream or Multiple Input Stream.
- CCM/ACM field (1 bit): Constant Coding and Modulation or Adaptive Coding and Modulation (VCM is signalled as ACM).
- ISSYI (1 bit), (Input Stream Synchronization Indicator): If ISSYI = 1 = active, the ISSY field (see annex D) is inserted after UPs or in the baseband header in GSE-HEM
- For TS input mode:
   ∘ NPD (1 bit): Null-packet deletion active/not active.
- For GSE/Generic Continuous/Generic Packetized modes:
   ∘ GSE-Lite (1 bit): GSE stream is GSE-Lite compliant/non-compliant
- RO (2 bits): Transmission Roll-off factor (α).
Three additional roll-off factors shall be available, 0,15; 0,10 and 0,05. Signalling shall be according to the following rule (Table 1[sic: should be revised as Table 2]):
∘ If RO bits are signalled consistently from BBHEADER to BBHEADER as either 00, 01, 10 the backward compatible definition (High roll-off range) applies:
   00 = 0,35
   01 = 0,25
   10 = 0,20
∘ If RO bits are signalled from BBHEADER to BBHEADER in an alternating way with 11 then their interpretation shall be Low roll-off range:
   00 = 0,15
   01 = 0,10
   10 = 0,05

It shall be ensured that the in a Multiple Input Stream configuration (SIS/MIS field = 0) alternation is unambiguously evident over all Input Streams (for every ISI) and MODCOD combinations, such that any receiver will receive regular alternation. Any receiver, once locked will switch to low roll-off range on first detection of '11'.

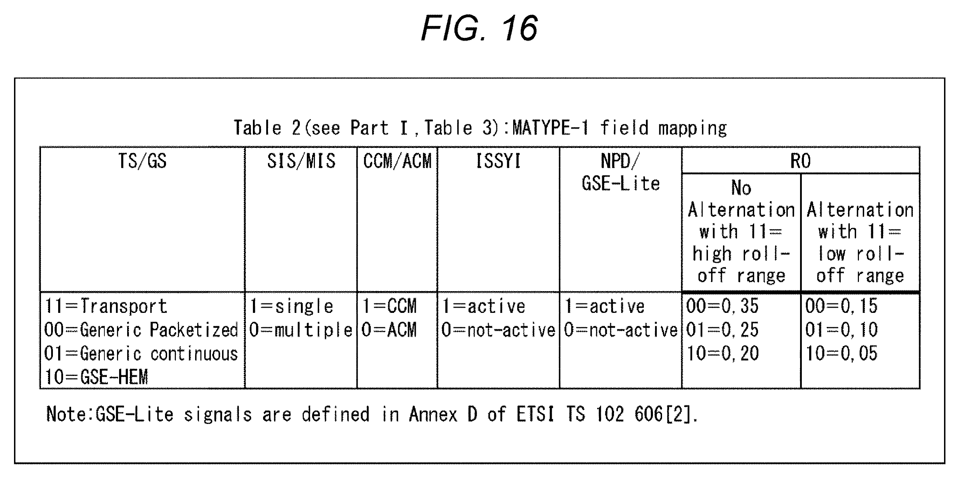

Fig. 16 shows Table 2 under standards of DVB-S2X.

### 5.1.7 GSE High Efficiency Mode (GSE-HEM)

GSE variable-length or constant length UPs may be transmitted in GSE-HEM. In GSE-HEM, slicing of GSE packets is performed and SYNCD shall always be computed. The receiver may derive the length of the UPs from the packet header, therefore UPL transmission in BBHEADER is not performed. UPs shall not be sliced when there is a BBFRAME from a different stream following, splitting is only possible with the immediately following BBFRAME. The optional ISSY field is transmitted in the BBHEADER.

The Mode Adaptation unit shall perform the following sequence of operations (see figure 1):
- Optional input stream synchronization (see Part I, Annex D.2) relevant to the first transmitted UP which starts in the data field; ISSY field inserted in the UPL and SYNC fields of the BBHEADER.
- Null-packet Deletion and CRC-8 at UP level shall not be computed nor inserted.
- SYNCD computation (pointing at the first bit of the first transmitted UP which starts in the Data Field) and storage in BBHEADER. The transmitted UP corresponds exactly to the original UP itself. Hence SYNCD points to the first bit of the original UP.
- UPL not computed nor transmitted.
- GSE-Lite compliance of the stream shall be signalled in the 6th bit of the MATYPE-1 field. GSE-Lite=1 means a GSE-Lite compliant signal is transmitted. GSE-Lite=0 means that the transmitted GSE stream may not meet the definition of a GSE-Lite signal.

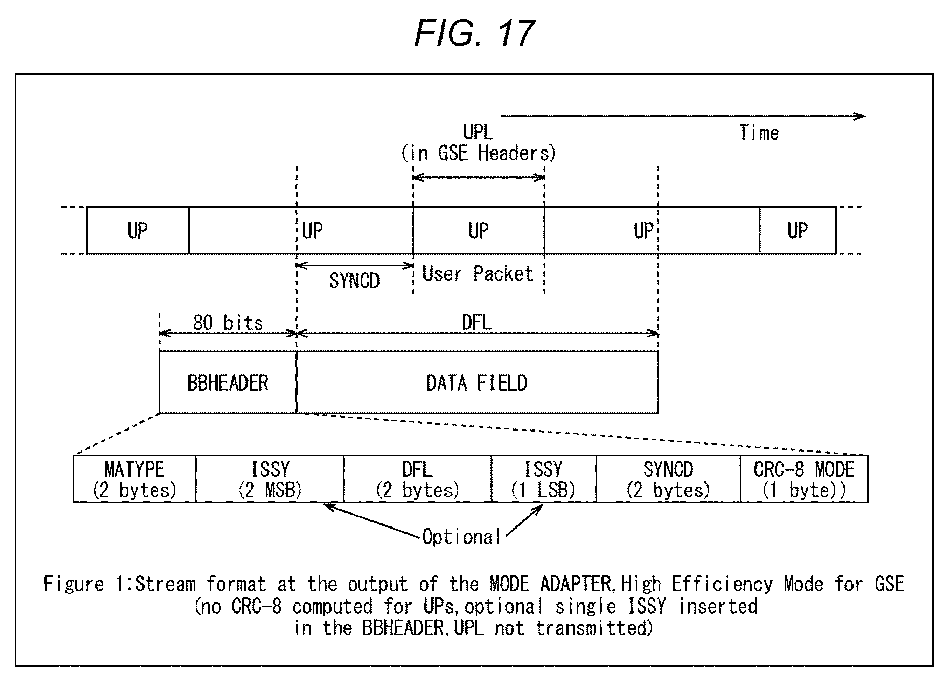

Fig. 17 shows Figure 1 under standards of DVB-S2X.

### 5.1.8.3. Channel bonding for GSE transmission

Generic Stream Encapsulation (GSE) [2] is an extremely flexible method to transmit any kind of data, including popular formats such as IP packets or TS packets where the data can be of fixed or variable length. GSE can be used for bonded channels to support a higher data rate than can be carried in a single RF channel. A maximum of L channels (L<=3) is supported. The number of bonded transponders and associated information is signalled in the GSE-LLC tables according to [2]. These GSE-LLC tables shall be transmitted in parallel over each of the bonded transponders. To ensure maximum efficiency in S2X, it is recommended to use GSE-HEM (see clause 5.1.7). The following describes the use of channel boding in GSE-HEM.

Channel bonding for GSE transmission is similar to the TS method of bonding described in clause 5.1.8.2, using the ISCR timing data in the ISSY field to allow the receiver to align packets from different RF channels (see Part I, Annex D for ISSY details). However ISSY is not added per UP, but per baseband frame (BBFRAME). ISSY shall always be used for bonded GSE channels. In the ISSY field, ISCR shall be transmitted every BBFRAME. BUFS and BUFSTAT shall not be transmitted. At the modulator, input UPs (GSE packets) are continuously added to the Data Field of a single BBFRAME until it is complete. Appropriate ISSY information is added to the baseband frame header (BBHEADER) of each BBFRAME. ISSY information refers to the first transmitted UP which starts in the Data Field. UPs shall be transparently sliced between BBFRAMEs on different RF channels as necessary it is not required to slice UPs on BBFRAMEs using the same RF channel. The order of input UPs must be maintained in the bonding process. Each BBFRAME is constructed with a length that is derived according to the modulation and coding parameters for that RF channel. Each RF channel may have different modulation and coding parameters. In order to reduce buffering requirements, BBFRAMEs shall be created for each RF channel according to the ratio of the bitrate of each RF channel. For example if the bitrates of two bonded RF channels are equal, BBFRAMEs for each RF channel shall occur in alternating fashion.

An example of the transmission of bonded GSE channels is shown in Figure 3 below.

At the receiver side, each GSE bonded RF channel is demodulated according to the modulation and coding parameters for that RF channel. An example diagram is shown in Figure 4.

The output from each demodulator is then combined at the Merger using the ISSY information contained in the BBHEADER of each BBFRAME. The ISSY information provides the timing information to recover the order of the BBRAMES from different demodulators. Since ISSY information applies to each BBFRAME, and the packet order of UPs within each BBFRAME is maintained, the overall order of UPs is maintained at the Merger output. Split UPs are reconstructed in the Merger.

In comparison to the TS method, the output bitrate of each demodulator is no greater than the bitrate of the channel, which can significantly reduce the processing burden at the Merger. Furthermore, since ISSY information need only be processed per BBFRAME, the merging operation processing burden is also reduced. A maximum tolerance of one BBFRAME of delay shall be allowed between the different receivers.

After merging, additional processing such as filtering of GSE packets, output of IP or TS packets rather than GSE packets, and so on may be undertaken at the receiver as necessary.

For Generic Packetized streams, ISSY must be added on a per packet basis the same as for TS channel bonding. CRC-8 shall be added per packet, as described in Part I clause 5.1.5. SYNCD shall be computed and point to the first bit of the CRC-8 of the previous UP. Packets shall only be split on the same RF channel.

For Generic Continuous streams using GSE, ISSY must be added on a per packet basis the same as for TS channel bonding. CRC-8 computation shall not be performed. SYNCD shall be computed and point to the first transmitted UP in the Data Field. The UPL field may contain proprietary signalling, including information about channel bonding, otherwise the UPL field shall be set to 0. GSE Packets shall only be split on the same RF channel.

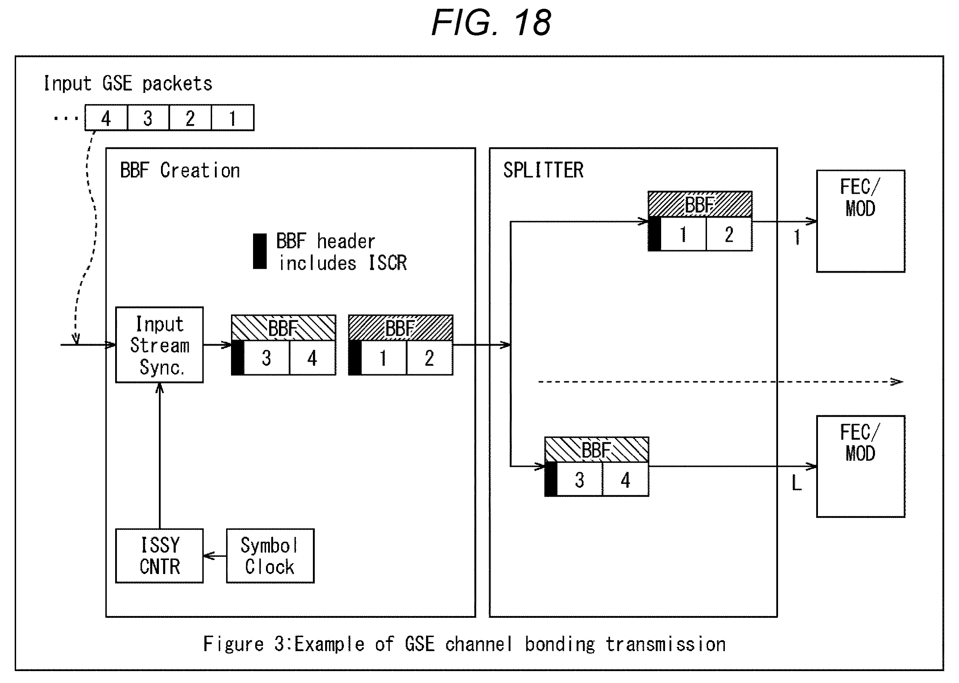

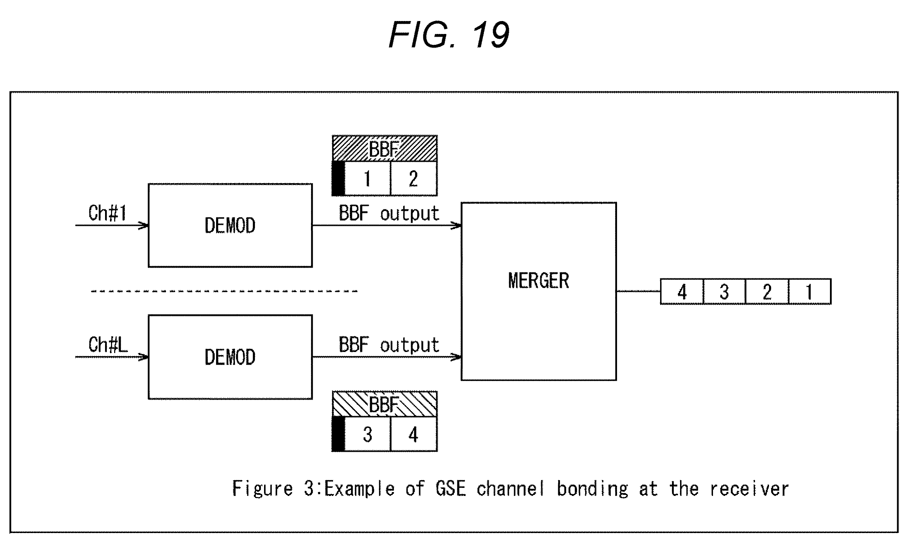

Fig. 18 shows Figure 3 under standards of DVB-S2X, while Fig. 19 shows Figure 4 under standards of DVB-S2X.

The present technology may have the following configurations.

<1> A data processing device including a split unit that splits an input stream constituted by a plurality of packets, and generates split streams of a plurality of channels having a base band frame (BBF) arranged in order of sequence of the packets of the input stream in the data field of the BBF subject to forward error correction (FEC) as a minimum unit.
<2> The data processing device according to <1>, further including a generation unit that generates time information indicating time, wherein the BBF includes the time information added to the packets of the BBF.
<3> The data processing device according to <2>, wherein a BB header of the BBF includes the time information included in a head packet of the BBF.
<4> The data processing device according to <3>, wherein
   the time information is input stream synchronizer (ISSY) specified in DVB-S2, and
   a UPL field and a SYNC field of the BB header of the BBF specified in DVB-S2 are used as fields to assign the ISSY.
<5> The data processing device according to <4>, wherein
   the split unit adds the time information to each of the packets, and
   deletes the time information included in the packets of the BBF, and inserts the time information included in the head packet of the BBF into the BB header of the BBF.
<6> The data processing device according to any one of <1> through <5>, wherein
   the split unit splits the input stream into the split streams in units of BBF data inserted into the BBF, and
   generates the BBF having the arranged data for the BBF of the split stream.
<7> The data processing device according to any one of <1> through <5>, wherein
   the split unit generates the BBF from the input stream, and
   splits the input stream into the split streams in units of the BBF.
<8> The data processing device according to any one of <1> through <7>, wherein the input stream is a transport stream (TS), a generic continuous stream (GCS), a stream of generic stream encapsulation (GSE) packets, a stream of GSE-Lite packets, or a stream of internet protocol (IP) packets.
<9> A data processing method including a step that splits an input stream constituted by a plurality of packets, and generates split streams of a plurality of channels having a base band frame (BBF) arranged in order of sequence of the packets of the input stream in the data field of the BBF subject to forward error correction (FEC) as a minimum unit.
<10> A data processing device including a reconstruction unit that reconstructs an input stream constituted by a plurality of packets from split streams of a plurality of channels transmitted from a transmitting device that splits the input stream, and generates the split streams of the plurality of channels having a base band frame (BBF) arranged in order of sequence of the packets of the input stream in the data field of the BBF subject to forward error correction (FEC) as a minimum unit.
<11> The data processing device according to <10>, wherein
   the transmitting device generates time information indicating time,
   the BBF includes the time information added to the packets included in the BBF, and
   the reconstruction unit reconstructs the input stream from the split streams of the plurality of channels based on the time information.
<12> The data processing device according to <11>, wherein
   a BB header of the BBF includes the time information included in a head packet of the BBF, and
   the reconstruction unit reconstructs the input stream from the split streams of the plurality of channels based on the time information included in the BB header.
<13> The data processing device according to <12>, wherein
   the time information is input stream synchronizer (ISSY) specified in DVB-S2, and
   a UPL field and a SYNC field of the BB header of the BBF specified in DVB-S2 are used as fields to assign the ISSY.
<14> The data processing device according to any one of <10> through <13>, wherein the input stream is a transport stream (TS), a generic continuous stream (GCS), a stream of generic stream encapsulation (GSE) packets, a stream of GSE-Lite packets, or a stream of internet protocol (IP) packets.
<15> A data processing method including a step that reconstructs an input stream constituted by a plurality of packets from split streams of a plurality of channels transmitted from a transmitting device that splits the input stream, and generates the split streams of the plurality of channels having a base band frame (BBF) arranged in order of sequence of the packets of the input stream in the data field of the BBF subject to forward error correction (FEC) as a minimum unit.

### REFERENCE SIGNS LIST

- 10: Transmitting device
- 11: CB split unit
- 20: Receiving device
- 21: CB reconstruction unit
- 30: Transmission path
- 41: Splitter
- 42₁ through 42_{N}: Buffer
- 43₁ through 43_{N}: Modulation unit
- 46: Symbol clock generation unit
- 47: Time associated information generation unit
- 51: Synchronization unit
- 52: Deletion unit
- 53: BBF generation unit
- 54: FEC/MOD unit
- 61: Synchronization unit
- 62: Deletion unit
- 63: BBF generation unit
- 64: Splitter
- 71₁ through 71_{N}: Demodulation unit
- 72: Merger
- 81: DMD/FEC unit
- 201: Bus
- 202: CPU
- 203: ROM
- 204: RAM
- 205: Hard disk
- 206: Output unit
- 207: Input unit
- 208: Communication unit
- 209: Drive
- 210: Input/output interface
- 211: Removable medium

## Claims

1. A data processing device comprising
a split unit that splits an input stream constituted by a plurality of packets, and generates split streams of a plurality of channels having a base band frame (BBF) arranged in order of sequence of the packets of the input stream in the data field of the BBF subject to forward error correction (FEC) as a minimum unit.

2. The data processing device according to claim 1, further comprising
a generation unit that generates time information indicating time, wherein
the BBF includes the time information added to the packets of the BBF.

3. The data processing device according to claim 2, wherein
a BB header of the BBF includes the time information included in a head packet of the BBF.

4. The data processing device according to claim 3, wherein
the time information is Input Stream Synchroniser (ISSY) specified in DVB-S2, and
a UPL field and a SYNC field of the BB header of the BBF specified in DVB-S2 are used as fields to assign the ISSY.

5. The data processing device according to claim 4, wherein
the split unit adds the time information to each of the packets, and
deletes the time information included in the packets of the BBF, and inserts the time information included in the head packet of the BBF into the BB header of the BBF.

6. The data processing device according to claim 4, wherein
the split unit splits the input stream into the split streams in units of BBF data inserted into the BBF, and
generates the BBF having the arranged data for the BBF of the split stream.

7. The data processing device according to claim 4, wherein
the split unit generates the BBF from the input stream, and
splits the input stream into the split streams in units of the BBF.

8. The data processing device according to claim 4, wherein
the input stream is a transport stream (TS), a generic continuous stream (GCS), a stream of generic stream encapsulation (GSE) packets, a stream of GSE-Lite packets, or a stream of internet protocol (IP) packets.

9. A data processing method comprising
a step that splits an input stream constituted by a plurality of packets, and generates split streams of a plurality of channels having a base band frame (BBF) arranged in order of sequence of the packets of the input stream in the data field of the BBF subject to forward error correction (FEC) as a minimum unit.

10. A data processing device comprising
a reconstruction unit that reconstructs an input stream constituted by a plurality of packets from split streams of a plurality of channels transmitted from a transmitting device that splits the input stream, and generates the split streams of the plurality of channels having a base band frame (BBF) arranged in order of sequence of the packets of the input stream in the data field of the BBF subject to forward error correction (FEC) as a minimum unit.

11. The data processing device according to claim 10, wherein
the transmitting device generates time information indicating time,
the BBF includes the time information added to the packets included in the BBF, and
the reconstruction unit reconstructs the input stream from the split streams of the plurality of channels based on the time information.

12. The data processing device according to claim 11, wherein
a BB header of the BBF includes the time information included in a head packet of the BBF, and
the reconstruction unit reconstructs the input stream from the split streams of the plurality of channels based on the time information included in the BB header.

13. The data processing device according to claim 12, wherein
the time information is input stream synchronizer (ISSY) specified in DVB-S2, and
a UPL field and a SYNC field of the BB header of the BBF specified in DVB-S2 are used as fields to assign the ISSY.

14. The data processing device according to claim 13, wherein
the input stream is a transport stream (TS), a generic continuous stream (GCS), a stream of generic stream encapsulation (GSE) packets, a stream of GSE-Lite packets, or a stream of internet protocol (IP) packets.

15. A data processing method comprising
a step that reconstructs an input stream constituted by a plurality of packets from split streams of a plurality of channels transmitted from a transmitting device that splits the input stream, and generates the split streams of the plurality of channels having a base band frame (BBF) arranged in order of sequence of the packets of the input stream in the data field of the BBF subject to forward error correction (FEC) as a minimum unit.

## Amended claims

### Amended claims under Art. 19.1 PCT

**1.** A data processing device comprising:
a generation unit that generates time information indicating time; and
a split unit that splits an input stream constituted by a plurality of packets, and generates split streams of a plurality of channels having a base band frame (BBF) arranged in order of sequence of the packets of the input stream in the data field of the BBF subject to forward error correction (FEC) as a minimum unit, wherein
a BB header of the BBF constituting the split streams includes the time information included in a head packet of the BBF.

**2.** The data processing device according to claim 1, wherein
the time information is input stream synchronizer (ISSY) specified in DVB-S2, and
a UPL field and a SYNC field of the BB header of the BBF specified in DVB-S2 are used as fields to assign the ISSY.

**3.** The data processing device according to claim 2, wherein
the split unit adds the time information to each of the packets, and
the split unit deletes the time information contained in the packets of the BBF, and inserts the time information contained in the head packet of the BBF into the BB header of the BBF.

**4.** The data processing device according to claim 2, wherein
the split unit splits the input stream into the split streams in units of BBF data inserted into the BBF, and
generates the BBF having the arranged data for the BBF of the split stream.

**5.** The data processing device according to claim 2, wherein
the split unit generates the BBF from the input stream, and
splits the input stream into the split streams in units of the BBF.

**6.** The data processing device according to claim 2, wherein the input stream is a transport stream (TS), a generic continuous stream (GCS), a stream of generic stream encapsulation (GSE) packets, a stream of GSE-Lite packets, or a stream of internet protocol (IP) packets.

**7.** A data processing method comprising steps of:
generating time information indicating time; and
splitting an input stream constituted by a plurality of packets, and generate split streams of a plurality of channels having a base band frame (BBF) arranged in order of sequence of the packets of the input stream in the data field of the BBF subject to forward error correction (FEC) as a minimum unit, wherein
a BB header of the BBF constituting the split streams includes the time information included in a head packet of the BBF.

**8.** A data processing device comprising
a reconstruction unit that reconstructs an input stream constituted by a plurality of packets from split streams of a plurality of channels transmitted from a transmitting device that generates time information indicating time, and splits the input stream, and generates the split streams of the plurality of channels having a base band frame (BBF) arranged in order of sequence of the packets of the input stream in the data field of the BBF subject to forward error correction (FEC) as a minimum unit and including the time information of a head packet of the BBF in a BB header, and the input stream being reconstructed based on the time information included in the BB header.

**9.** The data processing device according to claim 8, wherein
the time information is input stream synchronizer (ISSY) specified in DVB-S2, and
a UPL field and a SYNC field of the BB header of the BBF specified in DVB-S2 are used as fields to assign the ISSY.

**10.** The data processing device according to claim 9, wherein
the input stream is a transport stream (TS), a generic continuous stream (GCS), a stream of generic stream Encapsulation (GSE) packets, a stream of GSE-Lite packets, or a stream of internet protocol (IP) packets.

**11.** A data processing method comprising
a step that reconstructs an input stream constituted by a plurality of packets from split streams of a plurality of channels transmitted from a transmitting device that generates time information indicating time, and splits the input stream, and generates the split streams of the plurality of channels having a base band frame (BBF) arranged in order of sequence of the packets of the input stream in the data field of the BBF subject to forward error correction (FEC) as a minimum unit and including the time information of a head packet of the BBF in a BB header, and the input stream being reconstructed based on the time information included in the BB header.

Statement under Art. 19.1 PCT
Claims 1, 7, 8, and 11 have been amended to make a point clear that each of split streams of a plurality of channels contains a BBF as a minimum unit, the BBF having a BB header containing time information contained in a head packet of the BBF.

This technique facilitates appropriate stream processing, for example.
